# FASCICULE DE BREVET EUROPEEN

(11) **EP 3 019 350 B1**
(45) Date de publication et mention de la délivrance du brevet: **30.05.2018**
(21) Numéro de dépôt: 14739127.0
(22) Date de dépôt: 10.07.2014
(51) Int. Cl.: B60C 13/02, B62M 6/75

(54) **PNEUMATIQUE POUR VELO**
FAHRRADLUFTREIFEN
BICYCLE AIR TYRE

(30) Priorité: 12.07.2013 FR 1356850
(43) Date de publication de la demande: 18.05.2016
(73) Titulaire: Compagnie Générale des Etablissements Michelin, 63000 Clermont-Ferrand (FR)
(72) Inventeur: PETITJEAN, Sylvain, F-63040 Clermont-Ferrand Cedex 9 (FR); BESTGEN, Luc, F-63040 Clermont-Ferrand Cedex 9 (FR); OLSOMMER, David, F-63040 Clermont-Ferrand Cedex 9 (FR)
(74) Mandataire: Millanvois, Patrick Jacques Jean
(86) Numéro de dépôt international: PCT/EP2014/064793
(87) Numéro de publication internationale: WO 2015/004223

(56) Documents cités:
- EP-A1- 2 055 507
- EP-A1- 2 277 718
- FR-A1- 2 229 562
- GB-A- 324 502
- US-A- 4 195 705

## Description

La présente invention concerne un pneumatique pour vélo et, plus particulièrement, un pneumatique pour vélo destiné à collaborer avec un dispositif d'assistance électrique.

Par dispositif d'assistance électrique, on entend un dispositif électrique, monté sur le vélo et apte à entraîner en rotation au moins une roue du vélo.

Le document DE-20314210-U1 décrit un principe d'entraînement d'un vélo par un dispositif d'assistance électrique ou moteur électrique dans lequel un pignon moteur engrène sur une denture solidaire du cercle de la jante avant du vélo, ladite denture étant une denture interne, c'est à dire dont les dents pointent vers l'axe de roue. Un inconvénient de ce dispositif est que la denture de la jante est susceptible de retenir des cailloux.

Les documents DE-4011567-A1 et US-5165776 décrivent un dispositif générateur d'électricité, pour l'éclairage d'un vélo, destiné à coopérer avec un pneumatique comprenant une denture de génératrice radiale, positionnée circonférentiellement sur un flanc du pneumatique et destinée à coopérer avec une denture complémentaire d'un pignon du dispositif générateur d'électricité. La denture positionnée sur le flanc de pneumatique est conçue pour entraîner en rotation le pignon libre du dispositif générateur d'électricité. Toutefois cette denture n'est pas dimensionnée pour être entraînée en rotation par le pignon moteur d'un dispositif d'assistance électrique.

Des pneumatiques pour vélo sont également décrit dans les documents US-A-4195705 et GB-A-324502.

L'invention a pour objet de proposer un pneumatique pour vélo comprenant une denture de génératrice sensiblement radiale, positionnée circonférentiellement sur un flanc du pneumatique et destinée à coopérer avec une denture complémentaire d'un pignon moteur d'un dispositif d'assistance électrique pour vélo.

L'invention propose pour cela un pneumatique pour vélo, ayant une largeur de section S, comprenant:
- deux flancs reliant une bande de roulement à deux bourrelets,
- une denture continue, de génératrice sensiblement radiale par rapport à l'axe de rotation du pneumatique, positionnée circonférentiellement sur une face axialement extérieure d'au moins un flanc, et comprenant des dents,
- les dents ayant une hauteur h et une longueur 1, et comprenant un matériau élastomérique ayant une dureté Shore A,
- la denture ayant un pas p entre deux dents consécutives,
- la hauteur h des dents étant au moins égale à 0.6 mm et au plus égale à 3 mm, la longueur 1 des dents étant au moins égale à 0.15 fois et au plus égale à 0.50 fois la largeur de section du pneumatique,
- le matériau élastomérique des dents ayant une dureté Shore A au moins égale à 55 et au plus égale à 85
- et le pas p de la denture étant au moins égal à 1.8 mm et au plus égal à 5.5 mm.

La géométrie extérieure d'un pneumatique est, en particulier, caractérisée par la largeur de section du pneumatique qui est la distance axiale entre les points axialement les plus extérieurs des flancs du pneumatique. Une distance axiale est une distance mesurée parallèlement à l'axe de rotation du pneumatique. Les points axialement les plus extérieurs sont les deux points les plus éloignés, selon la direction axiale, du plan équatorial du pneumatique, le plan équatorial passant par le milieu de la bande de roulement perpendiculairement à l'axe de rotation du pneumatique. Cette distance axiale est mesurée sur un pneumatique monté sur sa jante et gonflé à sa pression d'utilisation, au sens des normes de la European Tyre and Rim Technical Organization ou ETRTO.

Les flancs sont les portions latérales d'un pneumatique reliant la bande de roulement, destinée à entrer en contact avec un sol, aux bourrelets, destinés à entrer en contact avec une jante.

Une denture est définie géométriquement par une génératrice. Pour une denture selon l'invention, la génératrice est sensiblement radiale, c'est-à-dire qu'elle forme un angle faible avec la direction radiale du pneumatique, perpendiculaire à la direction axiale de l'axe de rotation du pneumatique. Plus précisément une génératrice sensiblement radiale forme un angle au plus égal à 45°, avec la direction tangente à la face axialement extérieure du flanc et située dans un plan méridien ou radial du pneumatique perpendiculaire à l'axe de rotation du pneumatique. La face axialement extérieure du flanc de pneumatique est la face du flanc en contact avec l'air atmosphérique, par opposition à la face axialement intérieure du flanc en contact avec l'air de gonflage du pneumatique.

En outre cette denture est positionnée circonférentiellement sur une face axialement extérieure d'au moins un flanc du pneumatique, c'est-à-dire selon la direction circonférentielle, la direction circonférentielle étant tangente à la surface de roulement du pneumatique et orientée selon le sens de roulement du pneumatique.

Plus précisément, la denture est une juxtaposition de dents. Chaque dent est caractérisée géométriquement par une longueur 1, mesurée selon la génératrice de la denture, et par une hauteur h, mesurée dans un plan perpendiculaire à la génératrice. La longueur 1 des dents définit la longueur d'engrènement maximale possible avec une denture complémentaire. La hauteur h des dents définit la profondeur d'engrènement maximale possible avec une denture complémentaire.

Selon l'invention, la hauteur h des dents est au moins égale à 0.6 mm et au plus égale à 3 mm et la longueur 1 des dents est au moins égale à 0.15 fois et au plus égale à 0.50 fois la largeur de section S du pneumatique.

Ces intervalles de valeurs respectifs pour la hauteur h et la longueur 1 des dents impliquent que la surface de contact entre une dent de la denture du pneumatique et une dent de la denture complémentaire du pignon du dispositif d'assistance électrique, avec laquelle la denture du pneumatique est destinée à coopérer, est comprise dans un intervalle de valeurs permettant de passer le couple généré par le dispositif d'assistance électrique à la roue. Ces intervalles de valeurs pour la hauteur h et la longueur 1 prennent en compte des contraintes d'encombrement pour le positionnement de la denture sur le flanc du pneumatique.

Egalement selon l'invention, le matériau élastomérique des dents a une dureté Shore A au moins égale à 55 et au plus égale à 85. La dureté Shore A est une caractéristique mécanique d'un matériau élastomérique mesurée conformément à la norme DIN 53505.

Une valeur minimale de dureté Shore A garantit une rigidité de flexion, autour de la génératrice de la denture, minimale pour le passage du couple généré par le dispositif d'assistance électrique à la roue, pour une longueur et une hauteur de dent données. Une valeur maximale de dureté Shore A limite l'impact de la denture sur la rigidité du flanc du pneumatique, autour de la direction circonférentielle, et par conséquent sur le confort du cycliste.

Le pas p de la denture est la distance mesurée entre les sommets de deux dents consécutives, dans un plan perpendiculaire à la génératrice G.

Selon l'invention, le pas p de la denture étant au moins égal à 1.8 mm et au plus égal à 5.5 mm.

Il a été constaté que, plus le pas de la denture est élevé, plus il génère un bruit important. En revanche, un pas plus élevé est plus tolérant à un défaut d'alignement entre la denture de pneumatique et la denture complémentaire d'un pignon. Par ailleurs, un pas plus élevé est moins sensible à la présence de corps étrangers, tels que, par exemple, de la neige ou de la boue, qui sont plus facilement évacués. A contrario, un pas plus faible est plus silencieux, mais moins tolérant à un défaut d'alignement ou à la présence de corps étrangers. L'intervalle de valeurs préconisé pour le pas de la denture permet d'obtenir ainsi une denture efficace en passage de couple, relativement silencieuse et tolérante à un défaut d'alignement ou à la présence de corps étrangers.

La combinaison des intervalles de valeurs respectivement pour la hauteur des dents, la longueur des dents, et la dureté Shore A du matériau élastomérique constitutif des dents, et le pas de la denture permet de transmettre à la roue un couple moteur généré par le dispositif d'assistant électrique pouvant atteindre une valeur de 50 Nm, voire 60Nm.

Préférentiellement, le matériau élastomérique des dents a une dureté Shore A au moins égale 66 et au plus égale à 80. Cet intervalle de valeurs de dureté Shore A assure un bon compromis entre la rigidité de flexion des dents et la rigidité de flexion des flancs.

Le pas p de la denture est encore plus avantageusement au moins égal à 2 mm et au plus égal à 3 mm. Cet intervalle de valeurs préféré pour le pas de la denture permet d'optimiser le compromis entre efficacité, bruit et tolérance à l'environnement de la denture. A titre d'exemple, un pas de denture de 2.3 mm a donné de bons résultats vis-à-vis de ce compromis.

Il est également avantageux que la génératrice de la denture forme, avec la direction du plan radial tangente à la face axialement extérieure du flanc, un angle au moins égal à 4° et au plus égal à 40°. Cet angle correspond à l'angle d'hélice de la denture de forme hélicoïdale.

Cette inclinaison de la génératrice de la denture, par rapport à la direction du plan radial tangente à la face axialement extérieure du flanc, augmente le rapport de conduite entre la denture du pneumatique et la denture complémentaire du pignon. Ainsi, le bruit généré est sensiblement réduit par rapport à une denture de génératrice strictement radiale, c'est-à-dire formant un angle nul par rapport à la direction radiale.

Il est encore plus avantageux que la génératrice de la denture forme, avec la direction du plan radial tangente à la face axialement extérieure du flanc, un angle au moins égal à 15° et au plus égal à 30°. Un angle de 25° est une configuration particulièrement avantageuse en termes de bruit généré.

Avantageusement les dents de la denture comprennent des faces motrices et des faces non motrices, l'angle d'ouverture des faces motrices étant au plus égal à l'angle d'ouverture des faces non motrices.

Selon une coupe perpendiculaire à la génératrice de la denture, chaque dent présente un profil sensiblement triangulaire dont un premier côté est la base du triangle, positionnée sur le flanc, et dont les deux autres côtés sont les faces respectivement motrice et non motrice. La face motrice est la face sur laquelle s'exerce la pression de contact de la denture complémentaire, la face non motrice étant l'autre face non soumise à cette pression de contact. Les deux faces respectivement motrice et non motrice forment chacune, avec la direction perpendiculaire à la base, un angle d'ouverture.

Un angle d'ouverture d'une face motrice au plus égal l'angle d'ouverture d'une face non motrice permet d'obtenir un profil dissymétrique de la dent, permettant de passer un couple moteur supérieur à celui obtenu avec un profil symétrique de la dent. En effet un profil dissymétrique entraîne une flexion de la dent plus faible qu'un profil symétrique, donc un passage d'effort plus important.

Il est encore avantageux que les faces motrices et les faces non motrices des dents aient un profil rectiligne. En effet, une face rectiligne présente une surface de contact plus élevée avec la denture complémentaire et donc permet de passer un couple plus élevé.

Il est également avantageux que les faces motrices et les faces non motrices des dents aient un profil curviligne. En effet, des faces curvilignes permettent d'augmenter la rigidité de flexion de la dent et donc permet de passer un couple plus élevé.

Les faces motrice et non motrice peuvent avoir également un profil combinant des parties rectiligne et curviligne pour cumuler les avantages précédemment décrits.

La génératrice de la denture peut également être curviligne, pour augmenter la longueur d'engrènement par rapport à une génératrice généralement rectiligne, d'où un gain potentiel en passage de couple.

Selon un mode de réalisation préféré, la denture comprend un matériau textile, de préférence de type polyamide aliphatique.

Le matériau textile est préférentiellement un polyamide aliphatique ou nylon, qui est un matériau couramment utilisé dans le domaine du pneumatique, en raison de son coût et de sa compatibilité avec les matériaux élastomériques.

Un matériau textile a le plus souvent la forme d'un tissu. Mais il peut également être constitué de renforts dispersés.

La présence d'un matériau textile, en plus du matériau élastomérique, permet d'améliorer la tenue à l'abrasion de la denture, résultant des cycles d'engrènement. Elle permet en outre de diminuer le bruit généré par un effet d'amortissement du matériau textile. Enfin, au niveau de la fabrication, un matériau textile, ayant une élasticité orthotrope, suit les déformations lors du moulage de la forme de la dent, au cours de la conformation du pneumatique lors de sa cuisson.

Selon une variante préférée du mode de réalisation préféré, la denture comprend, axialement à l'extérieur du matériau élastomérique, un matériau textile, de préférence de type polyamide aliphatique.

Un matériau textile, positionné à l'extérieur du matériau élastomérique, présente l'avantage d'être facile à mettre en place. En outre, il permet d'augmenter le rendement de la transmission en offrant un meilleur glissement entre la denture du pneumatique et la denture complémentaire, diminuant ainsi les pertes par frottement par un effet lubrifiant.

Les caractéristiques et autres avantages de l'invention seront mieux compris à l'aide des figures schématiques et non représentées à l'échelle, en annexe:
- figure 1: vue en perspective d'une portion de pneumatique pour vélo comprenant une denture selon l'invention,
- figure 2: vue en coupe d'une denture selon l'invention, dans un plan de coupe perpendiculaire à la génératrice de la denture,
- figure 3: vue en coupe d'une denture selon l'invention, comprenant un matériau textile, dans un plan de coupe perpendiculaire à la génératrice de la denture.

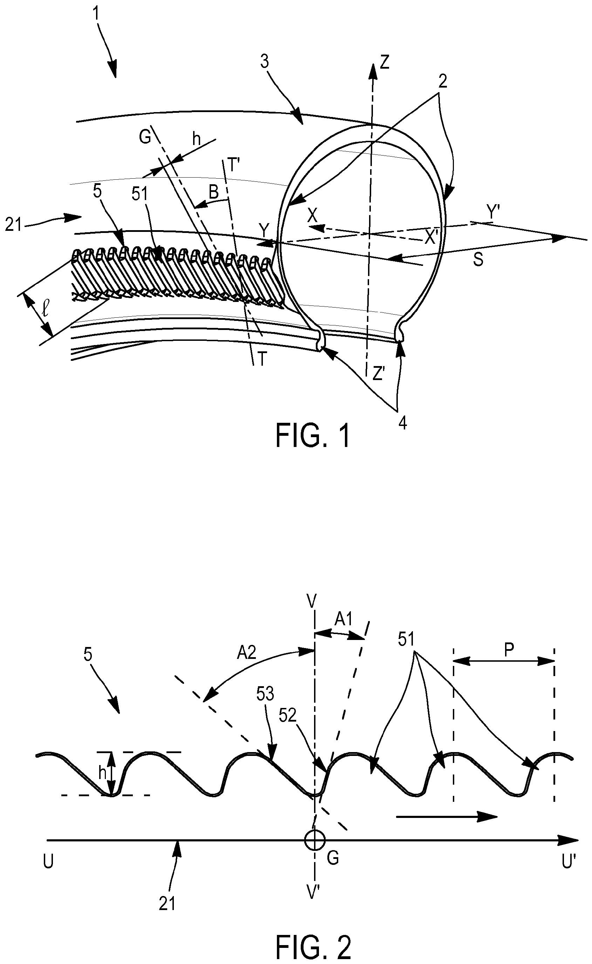

La figure 1 présente une portion de pneumatique 1, comprenant une denture 5 selon l'invention. Le pneumatique 1 comprend deux flancs 2 reliant une bande de roulement 3, destinée à entrer en contact avec un sol (non représenté) à deux bourrelets 4, destinés à entrer en contact avec une jante de montage (non représentée). Les directions XX', YY' et ZZ' désignent respectivement la direction circonférentielle, tangente à la bande de roulement 3 du pneumatique et orientée selon le sens de roulement du pneumatique, la direction axiale, parallèle à l'axe de rotation (non représenté) du pneumatique, et la direction radiale, perpendiculaire à l'axe de rotation du pneumatique. Le pneumatique 1 a une largeur de section S, mesurée selon la direction axiale YY', entre les points les plus axialement extérieurs des faces axialement extérieures 21 des flancs 2. Le pneumatique 1 comprend une denture 5 continue, de génératrice G sensiblement radiale par rapport à l'axe de rotation du pneumatique de direction axiale YY', positionnée circonférentiellement, selon la direction XX', sur une face axialement extérieure 21 d'au moins un flanc 2. La génératrice G forme un angle B, avec la direction TT', positionnée dans le plan radial ou méridien YZ et tangente à la face axialement extérieure 21 du flanc 2. La denture 5 comprend des dents 51 ayant une hauteur h et une longueur 1, les dents 51 comprenant un matériau élastomérique ayant une dureté Shore A.

Selon l'invention, la hauteur h des dents 51 est au moins égale à 0.6 mm et au plus égale à 3 mm, la longueur 1 des dents 51 est au moins égale à 0.15 fois et au plus égale à 0.50 fois la largeur de section S du pneumatique et le matériau élastomérique des dents (51) a une dureté Shore A au moins égale à 55 et au plus égale à 85.

La figure 2 est une vue en coupe d'une denture 5 selon l'invention, dans un plan de coupe UV, perpendiculaire à la génératrice G de la denture 5. La denture 5 est constituée d'une juxtaposition de dents 51, espacées d'un pas p. Le pas p est la distance mesurée entre les sommets de deux dents 51 consécutives, selon la direction UU' parallèle à la face axialement extérieure 21 du flanc 2. Chaque dent 51 a une hauteur h, mesurée entre la base et le sommet de la dent 51, selon la direction VV' perpendiculaire à la face axialement extérieure 21 du flanc 2. Chaque dent 51 comprend une face motrice 52 et une face non motrice 53. Dans le mode de réalisation représenté sur la figure 2, l'angle d'ouverture A₁ de la face motrice 52, par rapport à la direction VV', est inférieur à l'angle d'ouverture A₂ de la face non motrice 53, par rapport à la direction VV'. En outre, la figure 2 illustre des dents comportant des faces motrice et non motrice rectilignes. Dans le cas d'une face curviligne, l'angle d'ouverture décrit ci-dessus doit être mesuré entre la tangente au point de la face curviligne correspondant à la demi-hauteur de dent et la direction VV'.

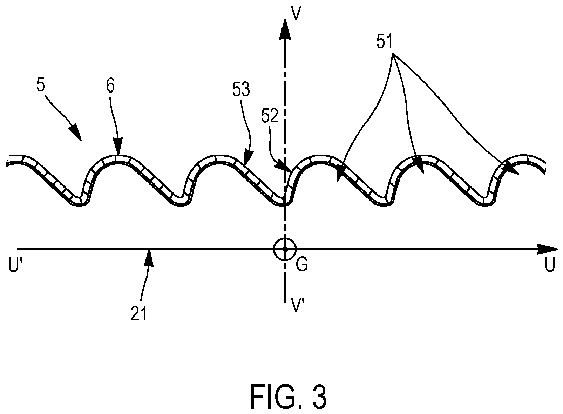

La figure 3 est une vue en coupe d'une denture 5 selon l'invention, comprenant un matériau textile, dans un plan de coupe UV, perpendiculaire à la génératrice G de la denture 5. Le mode de réalisation de la figure 3 diffère de celui de la figure 2 en ce que la denture 5 comprend, axialement à l'extérieur du matériau élastomérique, un matériau textile 6, de préférence de type polyamide aliphatique. Le matériau textile 6 utilisé est un tissu de type polyamide aliphatique ou nylon.

Plusieurs configurations de denture, dont la conception a été optimisée par des simulations par éléments finis, ont été expérimentées par les inventeurs pour un pneumatique pour vélo de dimension 37-622.

Dans un premier exemple de denture, les dents ont une hauteur de 1.2 mm, une longueur de 7.5 mm et un pas de 3 mm. Elles sont constituées d'un matériau élastomérique ayant une dureté Shore A comprise entre 66 et 80. Ce premier exemple de denture permet de passer un couple moteur d'environ 20 Nm.

Dans un deuxième exemple de denture, les dents ont une hauteur de 0.94 mm, une longueur de 10 mm et un pas de 2.3 mm. Elles sont constituées d'un matériau élastomérique ayant une dureté Shore A comprise entre 66 et 80. Ce deuxième exemple de denture permet également de passer un couple moteur d'environ 20 Nm.

L'invention a été essentiellement décrite pour une denture 5, positionnée à proximité du bourrelet 4 du pneumatique, dans la partie radialement intérieure du flanc 2. Alternativement, la denture 5 peut être positionnée à l'épaule du pneumatique, c'est à dire à proximité de la bande de roulement 3, voire au centre de la bande de roulement, au niveau du plan équatorial.

L'invention a été essentiellement décrite en référence à un pneumatique pour vélo mais peut être étendue à tout pneumatique, voire à tout bandage plein, c'est-à-dire non gonflé, destiné à coopérer avec un dispositif d'assistance électrique pour la motorisation de petits véhicules de transport de personnes, tels que des trottinettes électriques, des fauteuils roulants électriques...Pour une application de fauteuil roulant électrique, les angles d'ouverture A₁ et A₂ respectivement des faces motrices et non motrices des dents doivent être proches afin de rendre possible un couple important à la roue non seulement en marche avant, mais également en marche arrière.

## Revendications

1. Pneumatique (1) pour vélo, ayant une largeur de section S, comprenant :
- deux flancs (2) reliant une bande de roulement (3) à deux bourrelets (4),
- une denture (5) continue, de génératrice (G) sensiblement radiale par rapport à l'axe de rotation du pneumatique de direction axiale (YY'), positionnée circonférentiellement sur une face axialement extérieure (21) d'au moins un flanc (2), et comprenant des dents (51),
- les dents (51) ayant une hauteur h et une longueur 1, et comprenant un matériau élastomérique ayant une dureté Shore A,
- la denture (5) ayant un pas p entre deux dents (51) consécutives,
**caractérisé en ce que** la hauteur h des dents (51) est au moins égale à 0.6 mm et au plus égale à 3 mm, **en ce que** la longueur 1 des dents (51) est au moins égale à 0.15 fois et au plus égale à 0.50 fois la largeur de section S du pneumatique, **en ce que** le matériau élastomérique des dents (51) a une dureté Shore A au moins égale à 55 et au plus égale à 85, **et en ce que** le pas p de la denture (5) est au moins égal à 1.8 mm et au plus égal à 5.5 mm.

2. Pneumatique (1) pour vélo selon la revendication 1 **dans lequel** le matériau élastomérique des dents (51) a une dureté Shore A au moins égale 66 et au plus égale à 80.

3. Pneumatique (1) pour vélo selon l'une quelconque des revendications 1 ou 2, la denture (5) ayant un pas p entre deux dents (51) consécutives, **dans lequel** le pas p de la denture (5) est au moins égal à 2 mm et au plus égal à 3 mm.

4. Pneumatique (1) pour vélo selon l'une quelconque des revendications 1 à 3 **dans lequel** la génératrice (G) de la denture (5) forme, avec la direction (TT') du plan radial (YZ) tangente à la face axialement extérieure (21) du flanc (2), un angle (B) au moins égal à 4° et au plus égal à 40°.

5. Pneumatique (1) pour vélo selon l'une quelconque des revendications 1 à 4 **dans lequel** la génératrice (G) de la denture (5) forme, avec la direction (TT') du plan radial (YZ) tangente à la face axialement extérieure (21) du flanc (2), un angle (B) au moins égal à 15° et au plus égal à 30°.

6. Pneumatique (1) pour vélo selon l'une quelconque des revendications 1 à 5 **dans lequel** les dents (51) de la denture (5) comprennent des faces motrices (52) et des faces non motrices (53), l'angle d'ouverture (A₁) des faces motrices (52) étant au plus égal à l'angle d'ouverture (A₂) des faces non motrices (53).

7. Pneumatique (1) pour vélo selon la revendication 6 **dans lequel** les faces motrices (52) et les faces non motrices (53) des dents (51) ont un profil rectiligne.

8. Pneumatique (1) pour vélo selon la revendication 6 **dans lequel** les faces motrices (52) et les faces non motrices (53) des dents (51) ont un profil curviligne.

9. Pneumatique (1) pour vélo selon l'une quelconque des revendications 1 à 8 **dans lequel** la génératrice (G) de la denture (5) est curviligne.

10. Pneumatique (1) pour vélo selon l'une quelconque des revendications 1 à 9 **dans lequel** la denture (5) comprend un matériau textile (6), de préférence de type polyamide aliphatique.

11. Pneumatique (1) pour vélo selon l'une quelconque des revendications 1 à 10 **dans lequel** la denture (5) comprend, axialement à l'extérieur du matériau élastomérique, un matériau textile (6), de préférence de type polyamide aliphatique.

## Patentansprüche

1. Fahrradreifen (1) mit einer Schnittbreite S, umfassend:
- zwei Seitenwände (2), die einen Laufstreifen (3) mit zwei Wulsten (4) verbinden,
- eine durchgehende Zahnung (5) einer Mantellinie (G), die im Wesentlichen radial im Verhältnis zu der Drehachse des Reifens axialer Richtung (YY') verläuft, die in Umfangsrichtung auf einer axial äußeren Seite (21) mindestens einer Seitenwand (2) positioniert ist und Zähne (51) umfasst,
- wobei die Zähne (51) eine Höhe h und eine Länge l aufweisen und ein Elastomermaterial mit einer Shore-A-Härte umfassen,
- wobei die Zahnung (5) einen Abstand p zwischen zwei aufeinanderfolgenden Zähnen (51) aufweist,
**dadurch gekennzeichnet, dass** die Höhe h der Zähne (51) mindestens gleich 0,6 mm und höchstens gleich 3 mm ist, dass die Länge l der Zähne (51) mindestens gleich 0,15 Mal und höchstens gleich 0,50 Mal die Schnittbreite S des Reifens ist, dass das Elastomermaterial der Zähne (51) eine Shore-A-Härte von mindestens gleich 55 und höchstens gleich 85 aufweist, und dass der Abstand p der Zahnung (5) mindestens gleich 1,8 mm und höchstens gleich 5,5 mm ist.

2. Fahrradreifen (1) nach Anspruch 1, wobei das Elastomermaterial der Zähne (51) eine Shore-A-Härte von mindestens gleich 66 und höchstens gleich 80 aufweist.

3. Fahrradreifen (1) nach einem der Ansprüche 1 oder 2, wobei die Zahnung (5) einen Abstand p zwischen zwei aufeinanderfolgenden Zähnen (51) aufweist, wobei der Abstand p der Zahnung (5) mindestens gleich 2 mm und höchstens gleich 3 mm ist.

4. Fahrradreifen (1) nach einem der Ansprüche 1 bis 3, wobei die Mantellinie (G) der Zahnung (5) mit der Richtung (TT') der Radialebene (YZ), die tangential zu der axial äußeren Fläche (21) der Seitenwand (2) verläuft, einen Winkel (B) bildet, der mindestens gleich 4° und höchstens gleich 40° ist.

5. Fahrradreifen (1) nach einem der Ansprüche 1 bis 4, wobei die Mantellinie (G) der Zahnung (5) mit der Richtung (TT') der Radialebene (YZ), die tangential zu der axial äußeren Fläche (21) der Seitenwand (2) verläuft, einen Winkel (B) bildet, der mindestens gleich 15° und höchstens gleich 30° ist.

6. Fahrradreifen (1) nach einem der Ansprüche 1 bis 5, wobei die Zähne (51) der Zahnung (5) Antriebsflächen (52) und Nichtantriebsflächen (53) umfassen, wobei der Öffnungswinkel (A₁) der Antriebsflächen (52) größer gleich dem Öffnungswinkel (A₂) der Nichtantriebsflächen (53) ist.

7. Fahrradreifen (1) nach Anspruch 6, wobei die Antriebsflächen (52) und die Nichtantriebsflächen (53) der Zähne (51) ein geradliniges Profil aufweisen.

8. Fahrradreifen (1) nach Anspruch 6, wobei die Antriebsflächen (52) und die Nichtantriebsflächen (53) der Zähne (51) ein krummliniges Profil aufweisen.

9. Fahrradreifen (1) nach einem der Ansprüche 1 bis 8, wobei die Mantellinie (G) der Zahnung (5) krummlinig ist.

10. Fahrradreifen (1) nach einem der Ansprüche 1 bis 9, wobei die Zahnung (5) ein Textilmaterial (6), vorzugsweise aus aliphatischem Polyamid, umfasst.

11. Fahrradreifen (1) nach einem der Ansprüche 1 bis 10, wobei die Zahnung (5) axial außerhalb des Elastomermaterials ein Textilmaterial (6), vorzugsweise aus aliphatischem Polyamid, umfasst.

## Claims

1. Bicycle tyre (1) having a section width S, comprising:
- two sidewalls (2) connecting a tread (3) to two beads (4),
- a continuous toothing (5) having a substantially radial generatrix (G) with respect to the rotation axis of the tyre in the axial direction (YY'), said toothing (5) being positioned circumferentially on an axially outer face (21) of at least one sidewall (2) and comprising teeth (51),
- the teeth (51) having a height h and a length l and comprising an elastomeric material having a Shore A hardness,
- the toothing (5) having a pitch p between two consecutive teeth (51),
**characterized in that** the height h of the teeth (51) is at least equal to 0.6 mm and at most equal to 3 mm, **in that** the length l of the teeth (51) is at least equal to 0.15 times and at most equal to 0.50 times the section width S of the tyre, **in that** the elastomeric material of the teeth (51) has a Shore A hardness of at least equal to 55 and at most equal to 85, **and in that** the pitch p of the toothing (5) is at least equal to 1.8 mm and at most equal to 5.5 mm.

2. Bicycle tyre (1) according to Claim 1, **wherein** the elastomeric material of the teeth (51) has a Shore A hardness of at least equal to 66 and at most equal to 80.

3. Bicycle tyre (1) according to either one of Claims 1 and 2, the toothing (5) having a pitch p between two consecutive teeth (51), **wherein** the pitch p of the toothing (5) is at least equal to 2 mm and at most equal to 3 mm.

4. Bicycle tyre (1) according to any one of Claims 1 to 3, **wherein** the generatrix (G) of the toothing (5) forms an angle (B) of at least equal to 4° and at most equal to 40° with the direction (TT') of the radial plane (YZ) tangential to the axially outer face (21) of the sidewall (2).

5. Bicycle tyre (1) according to any one of Claims 1 to 4, **wherein** the generatrix (G) of the toothing (5) forms an angle (B) of at least equal to 15° and at most equal to 30° with the direction (TT') of the radial plane (YZ) tangential to the axially outer face (21) of the sidewall (2).

6. Bicycle tyre (1) according to any one of Claims 1 to 5, **wherein** the teeth (51) of the toothing (5) comprise driving faces (52) and non-driving faces (53), the opening angle (A₁) of the driving faces (52) being at most equal to the opening angle (A₂) of the non-driving faces (53).

7. Bicycle tyre (1) according to Claim 6, **wherein** the driving faces (52) and the non-driving faces (53) of the teeth (51) have a rectilinear profile.

8. Bicycle tyre (1) according to Claim 6, **wherein** the driving faces (52) and the non-driving faces (53) of the teeth (51) have a curvilinear profile.

9. Bicycle tyre (1) according to any one of Claims 1 to 8, **wherein** the generatrix (G) of the toothing (5) is curvilinear.

10. Bicycle tyre (1) according to any one of Claims 1 to 9, **wherein** the toothing (5) comprises a textile material (6), preferably of the aliphatic polyamide type.

11. Bicycle tyre (1) according to any one of Claims 1 to 10, **wherein** the toothing (5) comprises, axially outside the elastomeric material, a textile material (6), preferably of the aliphatic polyamide type.
